# EUROPÄISCHE PATENTSCHRIFT

(11) **EP 1 969 703 B1**
(45) Veröffentlichungstag und Bekanntmachung des Hinweises auf die Patenterteilung: **19.12.2012**
(21) Anmeldenummer: 06841512.4
(22) Anmeldetag: 20.12.2006
(51) Int. Cl.: H02M 1/36

(54) **GLEICHSPANNUNGS-GLEICHSPANNUNGSWANDLER**
DC TO DC CONVERTER
CONVERTISSEUR CONTINU-CONTINU

(30) Priorität: 30.12.2005 DE 102005063189
(43) Veröffentlichungstag der Anmeldung: 17.09.2008
(73) Patentinhaber: Sennheiser electronic GmbH & Co. KG, 30900 Wedemark (DE)
(72) Erfinder: HAGEMEYER, Frank, 30900 Wedemark (DE); HIMMELREICH, Peter, 29223 Celle (DE)
(74) Vertreter: Eisenführ, Speiser & Partner
(86) Internationale Anmeldenummer: PCT/EP2006/070012
(87) Internationale Veröffentlichungsnummer: WO 2007/077131

(56) Entgegenhaltungen:
- EP-A- 0 326 220
- EP-A- 1 087 511
- FR-A- 2 744 299

## Beschreibung

Die vorliegende Erfindung betrifft einen Gleichspannungs-Gleichspannungswandler.

Gleichspannungs-Gleichspannungswandler zur Umwandlung einer ersten Gleichspannung in eine zweite Gleichspannung sind hinlänglich bekannt. Derartige Gleichspannungswandler werden beispielsweise für die Spannungsversorgung von tragbaren elektronischen Geräten verwendet, um eine durch eine Energieversorgung (Batterie, Akku) gelieferte Gleichspannung in eine weitere meist höhere Gleichspannung umzuwandeln.

EP 0 326 220 zeigt einen DC/DC- Wandler mit einem FET-Transistor zur Spannungswandlung, einen Bipolartransistor parallel zu dem FET und einen zweiten FET zum Deaktivieren des Bipolartransistors.

Es ist Aufgabe der vorliegenden Erfindung, einen Gleichspannungs-Gleichspannungswandler vorzusehen, welcher einen hohen Wirkungsgrad und eine niedrige Niederspannung für das Einschalten aufweist.

Diese Aufgabe wird durch einen Gleichspannungs-Gleichspannungswandler gemäß Anspruch 1 gelöst.

Somit wird ein Gleichspannungs-Gleichspannungswandler mit einer Gleichspannungs-Gleichspannungswandlereinheit, einem ersten Feldeffekttransistor zur Spannungswandlung, einem bipolaren Transistor zur Starthilfe und einem zweiten Feldeffekttransistor zum Abschalten des Bipolartransistors vorgesehen. Der Bipolartransistor ist parallel zu dem ersten Feldeffekttransistor angeordnet, und der zweite Feldeffekttransistor ist vor dem Bipolartransistor geschaltet.

Damit wird ein Gleichspannungs-Gleicfispannungswandler vorgesehen, welcher auch bei einer niedrigen Anlaufspannung aufgrund der niedrigen Schwellwertspannung des Bipolartransistors aktiviert werden kann. Dieser Bipolartransistor wird jedoch nach dem Anlaufvorgang abgeschaltet, da der Bipolartransistor sich negativ auf den Wirkungsgrad auswirkt. Folglich wird ein Gleichspannungs-Gleichspannungswandler vorgesehen, welcher einen hohen Wirkungsgrad aufweist und trotzdem bei einer niedrigen Spannung anlaufen kann.

Ein Glelchspannungs-Gleichspannungswandfer weist somit einen Feldeffekttransistor für die Spannungswandlung, einen bipolaren Starthilfetransistor, welcher parallel zu dem Feldeffekttransistor für die Spannungswandlung angeordnet ist, und einen Abschalt-Feldeffekttransistor auf. Der Abschatt-Fetdeffekttransistor ist dem bipolaren Starthilfetransistor vorgeschaltet. Beim Anlauf. d.h. beim Einschalten, ist die Spannung für den Feldeffekttransistor für die Spannungswandlung als Schalttransistor zu niedrig. Der Anlauf kann somit nur mit dem dazu parallel geschalteten bipolaren Starthilfetranslstor erfolgen. Wenn die Schaltung erst angelaufen ist, erzeugt sie eine ausreichende Spannung für den Betrieb des Feldeffekttransistors für die Spannungswandlung, so dass die Funktion des Starthilfetransistors nicht mehr benötigt wird. Mittels einer einstufigen Kaskade kann eine Spannung von mindestens 12V erzeugt werden. Durch diese Spannung wird der Abschalt-Fetdeffekttransistor vor dem Starthilfetransistor hoch, so dass der Starthilfetransistor für die Schaltung "unsichtbar" wird.

Weitere Ausgestaltungen der Erfindung sind Gegenstand der Unteransprüche.

Nachfolgend wird die vorliegende Erfindung unter Bezugnahme auf die beigefügte Zeichnung näher erläutert.
- Fig. 1: zeigt ein Blockschaltbild des Gleichspannungs-Gleichspannungswandlers gemäß der Erfindung, und
- Fig. 2A - 2C: zeigen ein Schaltbild des Gleichspannungs-Gleichspannungswandlers von Figur 1,

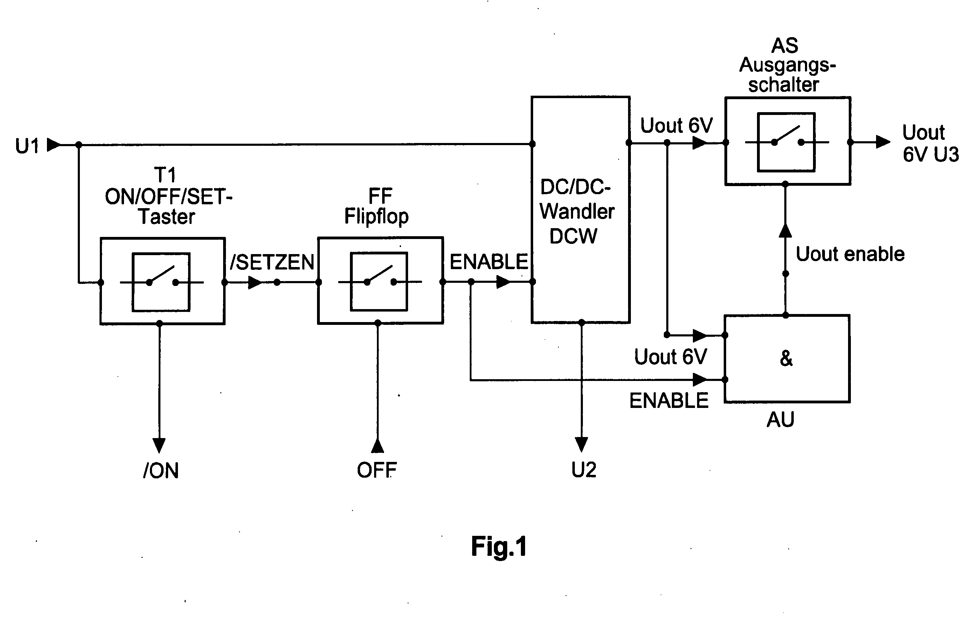

Fig. 1 zeigt ein Blockschaltbild eines Gleichspannungs-Gleichspannungswandlers gemäß der Erfindung. Der Gleichspannungs-Gleichspannungswandler weist einen Eingang auf, an welchem eine erste Spannung U1 angelegt wird. Die erste Spannung U1 entspricht einer Batteriespannung, welche die Energieversorgung für ein elektronisches Gerät bereitstellt. Der Gleichspannungs-Gleichspannungswandler weist ferner einen Ein/Aus-Taster T1, eine Flip-Flop-Einheit FF, eine Gleichspannungs-Gleichspannungswandlereinheit DCW, eine Additionseinheit AU und einen Ausgangsschalter AS auf. Der Gleichspannungs-Gleichspannungswandler gibt eine zweite Spannung U2 und eine dritte Spannung U3 aus. Wenn der Taster T1 betätigt wird, dann geht das Signal /SETZEN auf einen niedrigen Pegel und die Flip-Flop-Einheit FF wird gesetzt. Wenn das Gerät jedoch bereits eingeschaltet ist, ist das /SETZEN wirkurlgslos, da die Flip-Flop-Einheit FF bereits gesetzt ist und in diesem Zustand verbleibt. Das Ausgangssignal /ON des Tasters T1 wird von einem Prozessor empfangen und entsprechen verarbeitet. Wenn das Gerät jedoch noch ausgeschaltet ist, setzt das Signal /SETZEN die Flip-Flop-Einheit FF und der Einschaltprozess beginnt. Das Signal /ON bleibt wirkungslos, da der Prozessor noch nicht in Betrieb ist, sondem erst der Einschaltprozess anfärtgt

Die Flip-Flop-Einheit FF dient dazu, die Glaichspannungs-Gleichspannungswandlereinheit DCW ein- und auszuschalten. Die Flip-Flop-Elnheit FF wird durch den Taster T1 eingeschaltet bzw. gesetzt. Alternativ dazu wird die Flip-Flop-Einheit FF eingeschaltet, wenn eine geladene Batteriezelle bzw. Akkuzelle in das elektronische Gerät eingelegt wird. Die Flip-Flop-Einheit FF kann durch langes Drücken des Tasters T1 durch einen Prozessor ausgeschaltet bzw, rückgesetzt werden, wenn der Taster über eine Zeit von mehr als ca, einer oder mehr Sekunden gehalten wird.

Die Gleichspannungs-Gleichspannungswandlereinheit DCW wird durch das Signal ENABLE aktiviert Der Ausgangsschalter AS dient dazu. die 6V-Ausgangsspannung der Gleichspannungs-Gleichspannungswandlereinheit an das elektronische Gerät als dritte Spannung U3 auszugeben. Dies erfolgt, wenn die Gleichspannungs-Gleichspannungswandlereinheit DCW arbeitet und eine Ausgangsspannung erzeugt sowie die Flip-Flop-Einheit FF gesetzt ist. Somit kann sichergestellt werden, dass die Ausgangsspannung nicht abgegeben wird, bevor die Wandlereinheit DCW nach einer Aktivierung sicher eingeschwungen ist Ferner kann sichergestellt werden, dass die Ausgangsspannung mit dem Ausschalten des Wandlers definiert abgeschaltet wird.

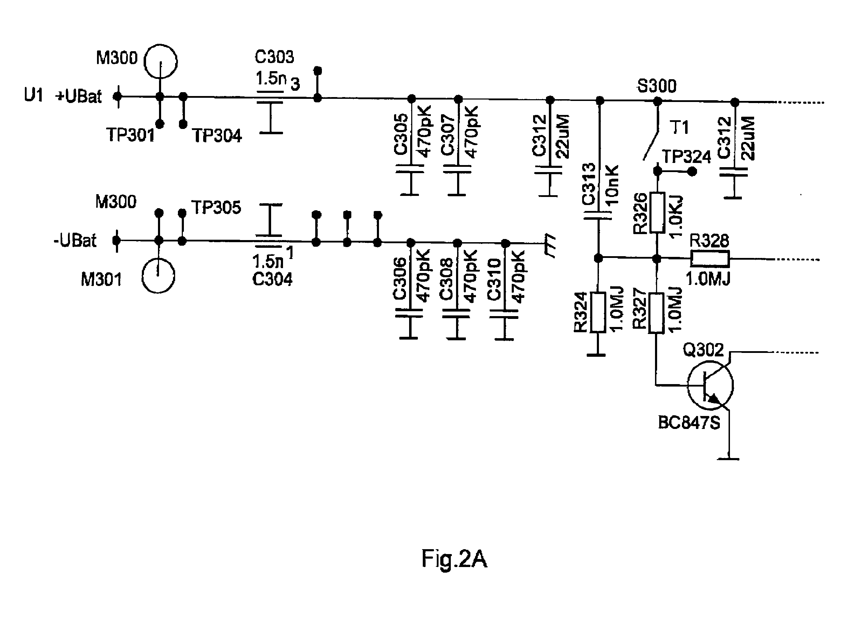

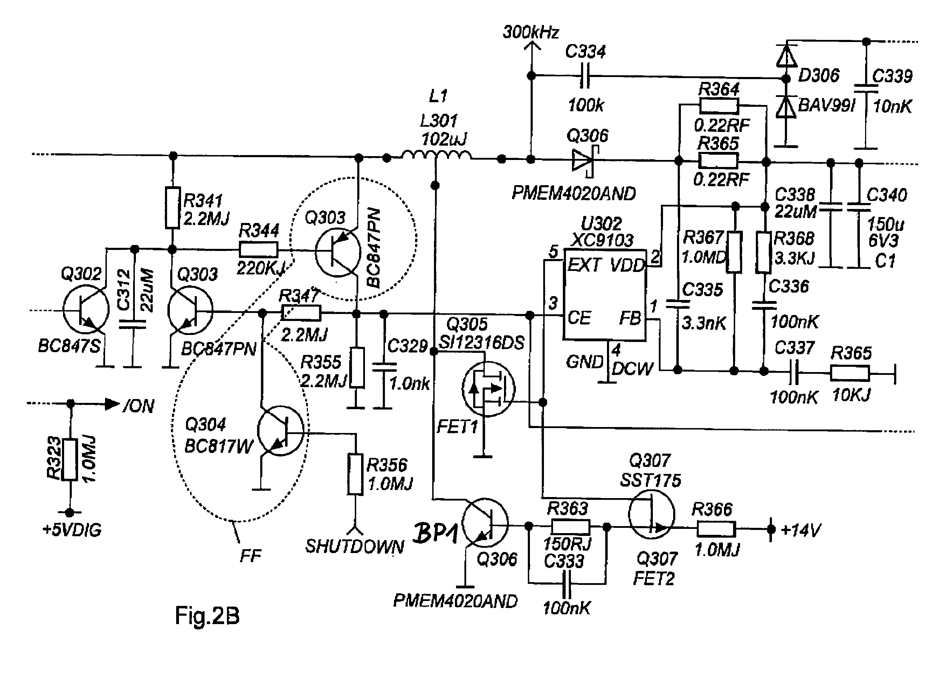

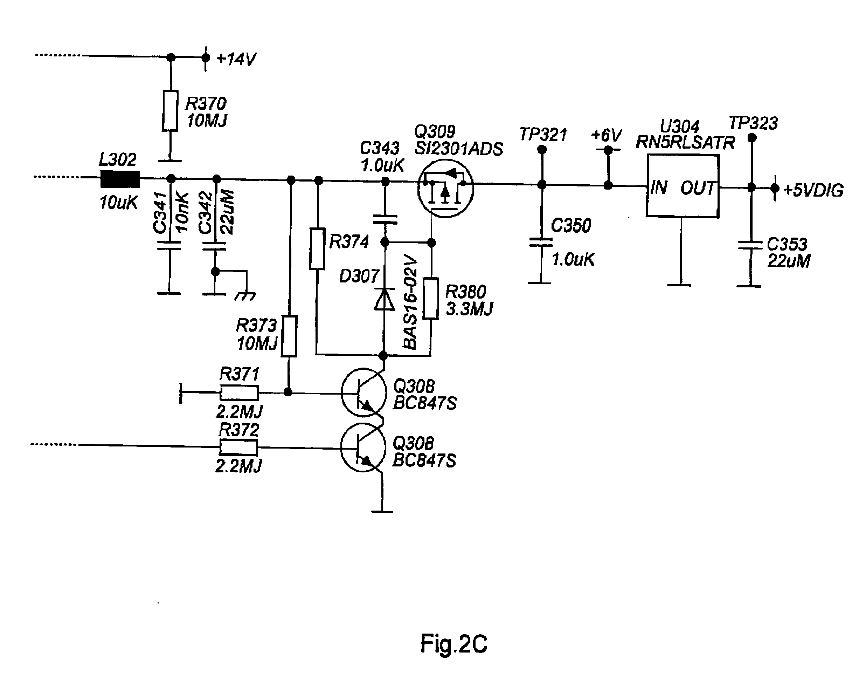

Fig. 2A bis 2C zeigen ein Schaltbild des Gleichspannungs-Gleichspannungswandlers von Fig. 1. Das in den Fig. 2A bis 2C gezeigte Schaltbild des Gleichspannungs-Gleichspannungswandlers sowie die konkreten Werte der einzelnen Elemente dienen lediglich der Veranschaulichung der Funktionsweise des Wandlers und sollte nicht als beschränkend angesehen werden. Die erste Spannung U1 liegt am Eingang des Gleichspannungs-Gleichspannungswandlers an. Der Gleichspannungswandler weist einen Taster T1, eine Flip-Flop-Einheit FF und eine Gleichspannungs-Gleichspannungswandlereinheit DCW auf. Ferner weist die Schaltung eine Induktivität L1, eine Kapazität C1, einen ersten Feldeffekttransistor FET1, einen zweiten Feldeffekttransistor FET2 sowie einen Bipolartransistor BP1 auf.

Wenn für eine bestimmte Zeit keine Batterie bzw. Akkuzelle in einem Batteriefach des elektronischen Gerätes vorhanden ist, kann sich die Kapazität C313 entladen. Am Kondensator C313 wird sich eine Spannung einstellen, die etwa der Zellenspannung entspricht. Sie wird sich aus dem Spannungsteiler von R324, dem Rest der angeschlossenen Schaltung und dem Leckwiderstand des Kondensators ergeben. Der Taster wird den Leckwiderstand überbrücken und die Spannung an der Basis von Q302 anheben. Die Transistoren werden leitend und setzen unter anderem das Flip-Flop. Der Transistor Q302 setzt das Flip-Fiop, wenn an seiner Basis eine positive Spannung anliegt. Diese kann über den Taster von einer geladenen Zelle weitergeleitet werden, es genügt aber auch der positive Spannungssprung beim Einlegen einer geladenen Zelle. Dieser Spannungssprung wird von C313 an die Basis des Transistors weitergeleitet. Wird jedoch eine Batterie bzw. Akkuzelle in das Batteriefach eingelegt so wird ein positiver Spannungssprung an den nächsten Knoten weitergeleitet. Wenn sich die Batteriezelle bzw. die Akkuzelle für einige Zeit in dem Batteriefach befindet, dann wird die Kapazität 313 über ihren Leckwiderstand auf die Zellenspannung aufgeladen. Somit kann die Spannung an einem nachfolgenden Knoten über den Taster T1 erhöht werden. Somit werden beide Transistoren Q302 leitend und das Ausgangssignals des Tasters T1 wird auf einen niedrigen Pegel gesetzt und die Flip-Flap-Einheit FF wird gesetzt. Der Transistor Q302 wird dazu verwendet einige Punktionen zu entkoppeln, da ein gesetztes Flip-Flop das Signal /ON blockieren würde.

Die Flip-Flop-Einheit weist einen Doppeltransistor Q303 auf und kann lediglich von einem Prozessor zurückgesetzt werden.

Die Gleichspannungs-Gleichspannungswandlereinheit DCW kann beispielsweise einen IC XC9103 von Torex aufweisen. Dieser Wandler kann beispielsweise einen extemen Transistor mit einer Schaltfrequenz von 300 kl-Iz steuem. Zur Verringerung des Rauschens, werden Kondensatoren parallel zu dem Widerstand eines Spannungsteilers geschaltet Die Regelung der Wandlereinheit DCW erfolgt bei konstanter Frequenz über eine Pulsweitenmodulation PWM. Eine Induktivität L1 (L301) ist als Wandlerspule vorgesehen. Vorzugsweise wird ein Spartransformator verwender. Über das Windungsverhältnis dieses Wandlertransformators lässt sich das Impuls-Pause-Varhältnis des Wandlers einstellen.

Die Widerstände R364 und R365 dienen dazu, die Siebkondensatoren C338 und C340 von dem Regelkreis zu entkoppeln. An dem Kondensator C339 kann eine Spannung von 14V gewonnen werden, welche lediglich eine ungeregelte Spannung darstellt und daher nur mit einem geringen Strom belastbar ist.

Ein leitender Transistor Q305. d.h. der erste Feldeffekttransistor FET1, initiiert einen Stromfluss durch die Primärwindung des Wandlertransformators. Wenn dieser Transistor hochohmig wird, zwingt die erregte Spule den Strom weiter durch die Diode Q306 und lädt die Siebkondensatoren C340 auf. Je länger die Transistoren leitend sind, desto höher ist der Strom, welcher die Kondensatoren auflädt.

Nachfolgend wird ein Anlauf des Wandlers mit einer geringen Batterie bzw. Zellenspannung (U1) beschrieben. Für den Anlauf werden insbesondere der erste Feldeffekttransistor FET1, welcher einen Feldeffekttransistor für die Spannungswandlung Q305, der erste Bipolartransistor BP1, welcher einen Starthilfetransistor Q306 darstellt, welcher parallel zu dem ersten Feldeffekttransistor FET1 geschaltet ist und der zweite Feldeffekttransistor FET2. Q307 benötigt, welcher einen Abschaltfeldeffekttransistor darstellt welcher selbstleitend ausgestaltet ist.

Wenn die Zellenspannung U1 beispielsweise lediglich 0,7V beiträgt, dann kann die Wandlereinheit DCW lediglich eine Gate-Source-Spannung von 0,7V an den ersten Feldeffekttransistor FET1 vorsehen. Mit einer derartigen Gate-Source-Spannung wird der Widerstand der Drain-Source-Strecke des ersten Feldeffekttransistors aber nicht klein genug, damit die Wandlerdrossel L1 ausreichend erregt wird.

Der bipolare Transistor BP1, Q306 wird jedoch bei einer Basis-Emitter-Spannung von 0,7V leitend, um den Wandlervorgang anlaufen zu lassen. Wenn die Ausgangsspannung ansteigt, dann kann der erste Feldeffekttransistor FET1 entsprechend arbeiten.

Vorzugsweise wird der Ausgang (d. h. der Treiber- oder Signalausgang für den externen Schalttransistor EXT, Pin 5) der Wandlereinheit DCW im Hinblick auf einen hohen Eingangswiderstand ausgelegt. Der geringe Eingangswiderstand des bipolaren Transistors BP1 stellt jedoch eine Belastung für dieses Signal dar. Dies hat zur Folge, dass die Wandlereinheit DCW zwar betrieben werden kann, dass sich jedoch ein geringer Wirkungsgrad einstellt. Dies ist insbesondere für eine lange Betriebsdauer der Batteriazellen oder der Akkuzellen nachteilig, Daher wird dem Bipolartransistor BP1, welcher als Starthilfetransistor fungiart, der selbstleitende zweite Feldeffekttransistor FET2, Q307 vorgeschaltet. Dieser zweite Feldeffekttransistor FET2 ist im Anlauf niederohmig, so dass der bipolare Transistor BP1 arbeiten kann.

Mittels einer einstufigen Kaskade wird eine Spannung von ca. 12V erzeugt. Diese lässt dem zweiten Feldeffekttransistor FET2 vor dem Bipolartransistor BP1 hochohmig werden. Das Signal für die Schalttransistoren verzweigt sich und liegt parallel am Gate des Schalt-FET1 und über den selbstleitenden FET2 an der Basis des bipolaren Schalttransistors BP1. Wenn der Wandler arbeitet, sorgt die in der Kaskade erzeugte Spannung von ca. 12V dafür, dass der dem BP1 vorgeschaltete FET2 hochohmig wird. BP1 kann die Schaltung in diesem Falle nicht belasten.

Um eine Ausgangsspannung von 6V an den Gleichspannungs-Gleichspannungswandler frei zu schalten, muss das Flip-Flop FF gesetzt sein und eine Betriebsspannung muss vorhanden sein. Wenn diese beiden Bedingungen erfüllt sind, werden die Transistoren Q308 leitend. Bevor der Transistor Q309 Jedoch leitend werden kann, muss die Kapazität C343 über den Widerstand R380 umgeladen werden. Daher wird die Ausgangsspannung mit einer Verzögerung von ca. einer Sekunde an das elektronische Gerät weitergeleitet. Während dieser Zeit können alle Einschwingvorgänge der Wandlereinheit DCW sicher beendet werden.

Ist das Flip-Flop FF nicht mehr gesetzt oder ist die Betriebsspannung nicht mehr vorhanden, dann kann der Kondensator C343 über die Diode D307 entladen werden. Der Transistor Q309 sperrt dann wesentlich schnelle als beim Einschalten,

Der erste Feldeffekttransistor FET1, Q305 sollte einen niedrigen Drain-Source-Widerstand bei einer geringen Gate-Source-Schwellenspannung sowie eine möglichst geringe Gate-Kapazität aufweisen.

Ein Schaltwandler PMEM4020AND kann den Bipolartransistor BP1 aufweisen.

Der zweite Feldeffekttransistor FET2, Q307 sollte einen minimalen Drain-Source-Widerstand bei einer Gate-Source-Spannung bei 0V aufweisen. Die Spannung, an der der Drain-Source-Widerstand maximal wird, sollte möglichst gering sein. Die Wandlereinheit DCW sollte einen Anlauf bei einer möglichst geringen Betriebsspannung gewährleisten, eine hohe Taktfrequenz aufgrund der Größe der Bauelemente aufweisen und keine zu hohe Taktfrequenz aufgrund der Verluste durch die Gate-Kapazität des ersten Feldeffekttransistor FET1, Q305 aufweisen. Ferner sollte die Wandlereinheit DCW einen reinen pulsweiten Betrieb aufweisen, um HF-Störungen durch die Wandierfrequenz sicher handhaben zu können. Ferner sollten eine externe Beschaftung aller Komponenten gewährleistet sein. Die Ausgangsspannung kann 6V und der Ausgangsstrom zwischen 0 und 50 mA betragen.

Das Übersetzungsverhältnis der Wandlerdrossel L1, L301 kann beispielsweise 1:4 aufweisen, damit die Wandlereinheit DCW die Ausgangsspannung auch bei einer Eingangsspannung von 0,4 bis 5V stabilisieren kann, Ferner sollte die Wandlerdrossel L1, L301 eine möglichst hohe Induktivität aufweisen, um einen sicheren Anlauf auch bei Kleinen Betriebsspannungen zu gewährleisten. Da das Volumen für die Wicklungen vorgegeben ist, wird die Drahtstärke mit steigender Windungszahl abnehmen und der Gleichspannungswiderstand wird zunehmen. Vorzugsweise weisen die Windungen 6µH : 100µH auf, um den Wandler ab 0,6V sicher anlaufen zu lassen, Derartige Induktivitäten können mit 8:32 Windungen realisiert werden. Pro Windung genügt ein einzelner Draht mit einem Durchmesser von vorzugsweise primär 0,26mm und sekundär 0,15mm. Mit derartigen Drahtstärken kann ein Primärstrom von bis zu 500mA auch für einen langen Zeitraum fließen. Der gewählte Kern besteht vorzugsweise aus dem Werkstoff N48 und weist einen A_{L}-Wert von 100 auf.

Der oben beschriebene Gleichspannungs-Gleichspannungswandler kann beispielsweise in einem Taschensender für ein drahtloses Mikrofon bzw. einen drahtlosen In-Ear Monitor vorgesehen werden. Alternativ bzw. zusätzlich dazu kann der Gleichspannungs-Gleichspannungswandler ebenfalls in einem drahtlosen Mikrofon, einem drahtlosen Headset, einer drahtlosen Hörhilfe oder dergleichen eingesetzt werden.

Alternativ bzw. zusätzlich dazu kann der oben beschriebene Gleichspannungs-Gleichspannungswandler eberfalls in einem tragbaren elektronischen bzw. elektrischen Gerät eingesetzt werden.

## Patentansprüche

1. Gleichspannungs-Gleichspannungswandler, mit
einer Gleichspannungs-Gleichspannungswandlereinheit (DCW) zum Wandeln einer ersten Gleichspannung (U1) in eine zweite Gleichspannung (Uout, U3),
einem ersten Feldeffekttransistor (FET1) zur Spannungswandlung,
einem Bipolartransistor (BP1) zur Starthilfe beim Einschalten des Gleichspannungs-Gleichspannungswandlers, wobei der Bipolartransistor parallel zu dem ersten Feldeffekttransistor (FET1) gekoppelt ist, und
einem zweiten Feldeffekttransistor (FET2) zum Deaktivieren des Bipolartransistors (BP1), wobei der zweite Feldeffekttransistor (FET2) vor den Bipolartransistor (BP1) geschaltet ist,
wobei die Gleichspannungs-Gleichspannungswandlereinheit (DCW) eingerichtet ist, die Transistoren (FET1, FET2, BP1) anzusteuern,
**dadurch gekennzeichnet,**
**dass** der erste Feldeffekttransistor (FET1) als ein selbstsperrender Feldeffekttransistor und der zweite Feldeffekttransistor (FET2) als ein selbstleitender Feldeffekttransistor ausgestaltet ist, wobei die Gleichspannungs-Gleichspannungswandlereinheit (DCW) einen Signalausgang (EXT, Pin 5) aufweist, welcher parallel am Gate des ersten selbstsperrenden Feldeffekttransistors (FET1) und über den zweiten selbstleitenden Feldeffekttransistor (FET2) an der Basis des Bipolartransistors (BP1) anliegt.

2. Gleichspannungs-Gleichspannungswandler nach Anspruch 1, wobei der bipolare Transistor (BP1) lediglich während eines Anlaufens des Gleichspannungs-Gleichspannungswandlers aktiv ist.

3. Elektronisches Gerät mit einem Gleichspannungs-Gleichspannungswandler nach einem der Ansprüche 1 bis 2.

## Claims

1. A DC to DC converter, comprising
a DC to DC converter unit (DCW) for converting a first DC voltage (U1) into a second DC voltage (Uout, U3),
a first field effect transistor (FET1) for voltage conversion,
a bipolar transistor (BP1) as a starting aid at switching-on of the DC to DC converter, the bipolar transistor being coupled in parallel with the first field effect transistor (FET1), and
a second field effect transistor (FET2) for deactivating the bipolar transistor (BP1), the second field effect transistor (FET2) being connected upstream of the bipolar transistor (BP1),
the DC to DC converter unit (DCW) being configured to actuate the transistors (FET1, FET2, BP1),
**characterised in that**
the first field effect transistor (FET1) is in the form of a normally-off field effect transistor and the second field effect transistor (FET2) is in the form of a normally-on field effect transistor, the DC to DC converter unit (DCW) having a signal output (EXT, Pin 5) which is applied in parallel at the gate of the first normally-off field effect transistor (FET1) and, via the second normally-on field effect transistor (FET2), at the base of the bipolar transistor (BP1).

2. A DC to DC converter according to claim 1, wherein the bipolar transistor (BP1) is active only during a start-up of the DC to DC converter.

3. An electronic device comprising a DC to DC converter according to either of claims 1 and 2.

## Revendications

1. Convertisseur continu-continu, comportant
une unité de convertisseur continu-continu (DCW) servant à convertir une première tension continue (U1) en une deuxième tension continue (Uout, U3),
un premier transistor à effet de champ (FET1) servant à convertir la tension,
un transistor bipolaire (BP1) servant de dispositif auxiliaire de démarrage lors de la mise en service du convertisseur continu-continu, le transistor bipolaire étant couplé en parallèle au premier transistor à effet de champ (FET1), et
un deuxième transistor à effet de champ (FET2) servant à désactiver le transistor bipolaire (BP1), le deuxième transistor à effet de champ (FET2) étant branché en amont du transistor bipolaire (BP1),
l'unité de convertisseur continu-continu (DCW) étant installée pour commander les transistors (FET1, FET2, BP1),
**caractérisé en ce**
**que** le premier transistor à effet de champ (FET1) est configuré en transistor à, effet de champ autobloquant, et en ce que le deuxième transistor à effet de champ (FET2) est configuré en transistor à effet de champ normalement passant, l'unité de convertisseur continu-continu (DCW) présentant une sortie de signal (EXT, Pin 5) qui se trouve en parallèle sur la grille du premier transistor à effet de champ (FET1) autobloquant et au-dessus du deuxième transistor à effet de champ (FET2) normalement passant à la base du transistor bipolaire (BP1).

2. Convertisseur continu-continu selon la revendication 1, dans lequel le transistor bipolaire (BP1) est actif uniquement au cours d'un démarrage du convertisseur continu-continu.

3. Appareil électronique équipé d'un convertisseur continu-continu selon l'une quelconque des revendications 1 et 2.
